# EUROPÄISCHE PATENTANMELDUNG

(11) **EP 4 706 378 A1**
(43) Veröffentlichungstag der Anmeldung: **11.03.2026**
(21) Anmeldenummer: 25200254.8
(22) Anmeldetag: 04.09.2025
(51) Int. Cl.: A01G 9/02

(54) **VORRICHTUNG ZUR BEGRÜNUNG EINER WAND**

(30) Priorität: 06.09.2024 DE 102024125613; 06.09.2024 DE 202024105159 U
(71) Anmelder: Green Mama Solutions GmbH, 55124 Mainz (DE)
(72) Erfinder: Buth, Barbara, 55124 Mainz (DE); Weber, Kathrin, 55118 Mainz (DE)
(74) Vertreter: Müller, Jochen

(57) **Zusammenfassung**

Eine Vorrichtung (1) zur Begrünung einer Wand (2) umfasst eine wandgebundene Trägervorrichtung (3) und eine daran befestigte Textilstruktur (7), die eine Pflanzenträgermatte (14) umfasst. Die Textilstruktur (7) umfasst mehrere Schichten, wobei auf der der Trägervorrichtung (3) zugewandten Seite ein Abstandsgewirk (10) angeordnet ist und die Pflanzenträgermatte (14) eine außenseitige Befestigungsschicht für die Pflanzen (17) umfasst.

## Beschreibung

Die Erfindung bezieht sich auf eine Vorrichtung zur Begrünung einer Wand mit einer wandgebundenen Trägervorrichtung und einer daran befestigten Textilstruktur, die eine Pflanzenträgermatte umfasst.

Die Begrünung von Fassaden hat vor dem Hintergrund des Klimawandels für versiegelte Flächen eine zunehmende Bedeutung, da sie beispielsweise die Luftqualität und das Regenwassermanagement positiv beeinflusst und für Abkühlungseffekte sorgt. Der Erhalt und die Entwicklung von Grünräumen im Rahmen einer klimaangepassten Quartiersentwicklung entgegnet den Herausforderungen des Klimawandels wie zunehmenden Hitze- oder Trockenperioden und Starkregenereignissen und beeinflusst somit die Lebensqualität positiv. Eine nachhaltige Grünentwicklung insbesondere in Städten ist notwendig.

Zur fassaden- und/oder wandgebundenen Begrünung ist es bekannt, horizontale und/oder vertikale Vegetationsflächen bereitzustellen, wobei zur Bereitstellung horizontaler Vegetationsflächen in der Regel als Einzel- oder Linearbehälter ausgebildete Pflanzgefäße für Substrate und Pflanzen an Tragkonstruktionen angeordnet sind.

Zur Bildung vertikaler Vegetationsflächen, so genannte vertikale Gärten, werden modulare Systeme oder flächige Konstruktionen verwendet, wobei modulare Systeme das Substrat in Elementeinheiten aus Körben, Gabionen, Matten, Kassetten, substrattragenden Rinnensysteme aufnehmen oder auch direkt begrünte Kunst- und Natursteinplatten umfassen.

Flächige Konstruktionen umfassen häufig Textilsysteme, Textil-Substrat-Systeme, Metallblechsysteme mit Öffnungen zu Vegetationsflächen so genannte Textil- bzw. Substratträger oder sind als Direktbegrünung auf nährstofftragenden Wandschalen realisiert.

Bei einer fassaden- bzw. wandgebundenen Begrünung handelt es sich meist um massive Wandaufbauten. Als Konstruktion eignen sich Holz- oder Metallkonstruktionen, die als Vorsatzschalen oder vorgehängt hinterlüftet vor den Fassaden angebracht werden.

Die am Markt erhältlichen Systeme benötigen in der Regel mindestens eine Bewässerungseinheit mit einer strombetriebenen Pumpe.

Die DE 20 2004 000 438 U1 offenbart eine Anordnung zur Begrünung einer aufrechten oder schrägen Wand mit einer wandseitigen Schutzschicht, eines daran anschließenden, zur wandabgewandten Seite offenen Füllkörpers und eines im Füllkörper befindlichen Substrats. Das Substrat wird durch eine Trennschicht aus textilem, durchwurzelbarem Flächengewebe gehalten und vollständig abgedeckt. Die Pflanzen werden außen auf die Trennschicht aufgebracht und wurzeln durch diese hindurch in das dahinter liegende Substrat. Die Schutzschicht ist als eine Wurzelschutzfolie, ein Trennvlies oder ähnliches ausgebildet und wird an der Wand angebracht. Die Schutzschicht dient in erster Linie dem Schutz der Fassade vor Wurzelschäden und Durchfeuchtung kann aber auch wärme- oder schallisolierende Funktion haben und zum Beispiel durch eine Styroporschicht ergänzt werden. Die Schutzschicht kann ferner Einrichtungen zur Hinterlüftung der Begrünungsanordnung enthalten, um eine eventuelle Dampfdiffusion durch die Wand nicht zu behindern. Im Anschluss an die Schutzschicht wird mittels Befestigungsvorrichtungen mindestens ein Füllkörper befestigt, der mindestens zur wandabgewandten Seite offen ist und aus einem dünnen, nicht verrottenden Kunststoff besteht. Die Tiefe des Füllraums bestimmt in der Regel die maximal mögliche Fülltiefe mit Substrat und wird in Abhängigkeit von der Bepflanzung abgestimmt. Jeder Füllkörper wird mit Pflanzsubstrat gefüllt. Ferner ist auch der Einbau eines Materials mit hoher Wasserspeicherfähigkeit in den Füllraum wie zum Beispiel einer Wasserspeichermatte denkbar, um das Wasserspeichervermögen des Substrates zu erhöhen. Eine Bewässerungseinrichtung kann Gießwasser in eine Matte einspeisen, die auf der wandzugewandten Seite und/oder auf der wandabgewandten Seite unmittelbar angrenzend an die Schutzschicht installiert wird. Das Substrat wird durch möglichst leichte, textile Flächengewebe abgedeckt, die auch als Trennschicht bezeichnet werden. Dies kann zum Beispiel Drain-Vlies oder Gewebe sein. Das hierfür verwendete Material kann verrottbar oder unverottbar sein, muss aber in jedem Fall durchwurzelbar sein. Auch eine Kombination aus verschiedenen Geweben und Vliesen ist möglich. Durch diese Trennschicht wird das Substrat im Kasten ausreichend vor dem Herausfallen oder Rieseln gesichert. Auf die Trennschicht können die in Pflanzmatten befindlichen Pflanzen und/oder Samen flächig aufgebracht werden. Die Pflanzen wurzeln durch die Trennschicht hindurch in das Innere des Füllkörpers und werden dort vom Substrat mit Wasser und Nährstoffen versorgt. Die Pflanzmatte besteht aus flexiblen Materialien wie zum Beispiel Vlies oder Gewebe. Die Pflanzen werden also in keiner Weise abgedeckt, sondern wachsen direkt auf der Matte. Die Pflanzmatte und die Trennschicht werden ggf. durch Haken, Spangen o. ä. am Füllkörper, am Substrat oder an der Aufhängung befestigt.

Im Weiteren ist aus der DE 203 18 883 U1 ein hängender Garten für die vertikale Begrünung von Fassaden, Innenwänden, freistehenden Trägergerüsten und Schrägen mit extremer Neigung bekannt, wobei die Begrünung mit einer voluminösen Pflanzenträgermatte erfolgt, die aus einer erdelosen substratfreien Textilstruktur mit einer sehr voluminösen porösen Querschnittsstruktur besteht, die von den Pflanzenwurzeln durchwurzelt wird und die Pflanzenträgermatte auf einer Seite mit einer Folie abgedeckt ist. Die Anordnung der in einen Rahmen eingespannten Pflanzenträgermatte erfolgt ohne Kontakt zu der zu begrünenden Fläche.

Darüber hinaus zeigt die WO 2019/162607 A1 eine modulare Vorrichtung zur Begrünung eines Gebäudes, bestehend aus mindestens einem Modul mit einer flachen Struktur, die auf einer ihrer großen Flächen sichtbare Vegetationselemente aufweist und in Form eines Trägers von flacher Beschaffenheit, quaderförmiger Form und geringer Dicke vorliegt und mit einer Bodenwand und mindestens zwei massiven Seitenwänden, wobei die dem Boden gegenüberliegende offene Seite des Moduls den Durchgang der Vegetationselemente ermöglicht. Das Modul besteht aus einer starren und durch einen mehrschichtigen Kulturkomplex abgedichteten Grundplatte, die mindestens ein erstes faseriges synthetisches Material umfasst. Mindestens eines der synthetischen Fasermaterialien besteht aus einer Filzschicht aus kardierten synthetischen Fasern mit einem Gewicht zwischen 300 und 800 Gramm pro Quadratmeter Meterware kardiert oder genadelt auf Polyethylen- oder Polypropylenfolie. Der Komplex ist mit einem Nährstoffmaterial imprägniert und wird an der starren Platte mit mindestens einem Teil seiner Kanten durch Heften befestigt.

Der Erfindung liegt die Aufgabe zugrunde, eine Vorrichtung der eingangs genannten Art zu schaffen, die an einem Bestandsgebäude relativ einfach anzubringen ist.

Erfindungsgemäß wird die Aufgabe dadurch gelöst, dass die Textilstruktur mehrere Schichten umfasst, wobei auf der der Trägervorrichtung zugewandten Seite ein Abstandsgewirk angeordnet ist und die Pflanzenträgermatte eine außenseitige Befestigungsschicht für die Pflanzen umfasst.

Bei einer Wand kann es sich um eine Außenwand beziehungsweise eine Fassade oder eine Innenwand eines Gebäudes handeln. Eine solche Wand ist üblicherweise im Wesentlichen vertikal also lotrecht ausgerichtet. Dennoch kann die Vorrichtung auch an einer Wand befestigt werden, die in jedem beliebigen Winkel verläuft, ohne den Rahmen der Erfindung zu verlassen.

Die Trägervorrichtung lässt sich an einer Wand eines Gebäudes befestigen und an der Trägervorrichtung ist die mehrere Schichten umfassende Textilstruktur zu befestigen, wobei den einzelnen Schichten der Textilstruktur unterschiedliche Aufgaben zukommen, die nachfolgend erläutert werden. Insbesondere sind keine wesentlichen Einrichtungen erforderlich, da beispielsweise die Wasserverteilung über die Textilstruktur erfolgt und die Pflanzenträgermatte, die von der Textilstruktur umfasst ist, derart ausgelegt ist, dass die Pflanzen eingesetzt werden können.

Die Trägervorrichtung stellt konstruktionstechnisch die Verbindung beziehungsweise das Bindeglied zwischen der Wand, bei der es sich um eine Außenfassade eines Gebäudes oder eine Innenwand handeln kann, dar. Die Trägervorrichtung kann beispielsweise eine die Textilstruktur aufspannende beziehungsweise halternde Rahmenkonstruktion festlegen und insbesondere einen modularen Aufbau sicherstellen.

Die Trägervorrichtung kann an die Beschaffenheit der jeweiligen Wand respektive Fassade angepasst sein und einen peripheren Rahmen umfassen. Die Textilstruktur lässt sich beispielsweise in dem Rahmen mit einer Rückwand kassettenartig gestalten, so dass auch eine hinterlüftete also zu der Wand beabstandete Montage möglich ist.

Vorzugsweise ist die der Trägervorrichtung zugewandte Seite des Abstandsgewirks aus einem hydrophoben Monofilament-Garn gefertigt, umfasst eine Distanzlage sowohl aus Monofiliament-Garn als auch aus Multifilament-Garn und eine in Richtung der Pflanzenträgermatte weisende Seite des Abstandsgewirks ist überwiegend aus einem hydrophilen Multifilament-Garn gefertigt. In diese Schicht kann das gesammelte Regenwasser gezielt eingeführt werden. Das Abstandsgewirk ist so entwickelt, dass die Unterseite, die an die Trägervorrichtung, die vorzugsweise eine Aluminium-Kassette umfasst, angrenzt, überwiegend aus dem hydrophoben Monofilament-Garn gefertigt ist. Als Abstandsfaden wird in der Distanzlage eine Mischung aus Mono- und Multifilament-Garn eingesetzt, die als Wasserrückhaltung dient. Die offenporige Oberseite des Abstandsgewirks besteht überwiegend aus einem hydrophilen Multifilament-Garn, was dafür sorgt, dass das Regenwasser mittels Kapillarkräfte an der Oberseite gehalten wird. Konstruktionstechnisch und/oder durch eine nachgelagerte Thermofixierung des Abstandsgewirks wird eine "Kippwirkung" des Abstandsfadens erreicht, die das eintretende Wasser zusätzlich und gezielt nach vorne lenkt.

Das Abstandsgewirk ist in seiner Gesamtheit sortenrein und recycelbar. Das Abstandsgewirk ist ein textiles dreidimensionales Flächengebilde aus Naturfasern und/oder Chemiefasern beispielsweise ein recycelbares Polyester. Die Dicke des Abstandsgewirks beträgt ca. zwischen 5 und 50 mm, vorzugsweise zwischen 10 und 25 mm. Das Flächengewicht des Abstandsgewirks im trockenen Zustand beträgt beispielsweise zwischen ca. 500 und 3000 g/m², bevorzugt zwischen ca. 1000 und 2000 g/m².

Bevorzugt umfasst die Textilstruktur auf der dem Abstandsgewirk zugewandten Seite eine Schutzschicht. Das aus dem Abstandsgewirk sequenziell austretende Wasser wird in der Schutzschicht, die quasi eine Wasserverteilungs- und Durchwurzelungsschutzschicht bildet, flächig verteilt. Die aus einem hydrophilen Vlies bestehende und aus Chemiefasern und/oder Naturfasern gefertigte Schutzschicht ist biologisch abbaubar und kompostierbar. Die Schutzschicht bildet zwar keinen dauerhaften Durchwurzelungsschutz soll aber bis zum Zeitpunkt seiner Zersetzung die Wurzeln beispielsweise von Flachballenpflanzen temporär aufhalten bzw. lenken. Bei der Schutzschicht handelt es sich um ein Vlies, beispielsweise aus Polylactid und/oder Hanf. Insbesondere kann es zu 95% aus Polylactid und 5% aus Hanf gefertigt sein. Vorzugsweise weist es eine Dicke zwischen 0,5 und 2 mm sowie ein trockenes Flächengewicht von beispielsweise zwischen ca. 25 und 500 g/m², bevorzugt zwischen ca. 50 und 250 g/m² auf.

Alternativ oder zusätzlich kann eine Speicherschicht vorgesehen sein, um Wasser zur Versorgung der Begrünung zu bevorraten. Die Schicht wie ein Vlies, Steinwolle oder eine Steinwollmatte kann das Wasser aufnehmen, speichern und flächig verteilen. Die Schicht kann zur Wasserverteilung, Wasserspeicherung, zur Speicherung von Nährstoffen und als Dämmschicht dienen.

Alternativ oder zusätzlich kann eine Windschutzschicht vorgesehen sein. Diese Schicht kann auch als gegebenenfalls zusätzlicher Infrarotabsorber dienen. Es handelt sich beispielsweise um ein Gewebe mit Satin-Bindung, insbesondere aus Basaltfasern.

In Ausgestaltung umfasst die Textilstruktur eine auf der Schutzschicht angeordnete Speicherschicht. Bevorzugt ist die Speicherschicht aus einem Vlies gefertigt. Zweckmäßigerweise besteht das Vlies aus Steinwolle. Die Speicherschicht dient sowohl als Wasserspeicher als auch als Nährstoff- und Wärmedämmschicht. Das recycelbare Vlies ist in seiner Gesamtheit sortenrein und kompostierbar und weist eine Dicke zwischen 5 und 80 mm, vorzugsweise zwischen 10 und 40 mm auf. Das Flächengewicht der Speicherschicht im trockenen Zustand beträgt beispielsweise zwischen ca. 500 und 8000 g/m², bevorzugt zwischen ca. 1000 und 4000 g/m².

Nach einer Weiterbildung umfasst die außenseitige Befestigungsschicht zum Befestigen von Pflanzen Öffnungen. Die Befestigungsschicht stellt auch eine Deck- und Drainageschicht dar und besteht aus einem Geogitter, das beidseitig mit Vliesen abgedeckt ist. Die Befestigungsschicht hält Substrat und Pflanzen an Ort und Stelle und erhält durch das integrierte Geogitter die erforderliche Festigkeit und Steifigkeit. Die Oberfläche der außenliegenden Vliese ist derart offenporig gestaltet, dass auch Schlagregen aufgenommen werden kann. Das Vlies umfasst eine Basaltfaser. Das Geogitter kann aus einer Basaltfaser und/oder einem Polyester gefertigt sein. Die Dicke der Befestigungsschicht beträgt zwischen 1 und 18 mm, vorzugsweise zwischen 3 und 9 mm. Das Flächengewicht der Befestigungsschicht im trockenen Zustand beträgt beispielsweise zwischen ca. 150 und 1800 g/m², bevorzugt zwischen ca. 300 und 900 g/m². An den Stellen, an denen die Pflanzen eingesetzt werden, weist die Befestigungsschicht Einschnitte oder Ausstanzungen auf.

Das erdenlose Substrat ist dimensionsstabil und weist eine Korngröße entsprechend den Anforderungen der Pflanzenträgermatte auf. Das Substrat umfasst beispielsweise 50 bis 65 Volumen-%, insbesondere 40 Volumen-%, Waschbims mit einer Körnung zwischen 4 und 8mm, 10 bis 15 Volumen-%, insbesondere 35 Volumen-%, Waschbims mit einer Körnung zwischen 2 und 5 mm, etwa 25 Volumen-% Zeolith mit einer Körnung zwischen 3 und 8 mm, zusätzlich ca. 10 Volumen-% Pflanzenkohle mit einer Körnung zwischen 3 und 5mm sowie Hydrogel (5 bis 10kg/1000l) und/oder organische Substratzusatzstoffe.

Zur Befestigung umfasst die Trägervorrichtung Haltebolzen, die sich durch die Textilstruktur erstrecken. In die Textilstruktur können Ösen, Hülsen, Tellerdübel oder andere Befestigungselemente wie beispielsweise Aluminiumschienen eingearbeitet sein, über die die Textilstruktur mit den Haltebolzen verbunden wird.

Die Pflanzenauswahl beruht auf der Idee der extensiven Dachbegrünung und es kommen Flachballenpflanzen (Zier- und Nutzpflanzen) zur Verwendung, die insbesondere bereits in mineralischem Substrat angezüchtet wurden. Die Pflanzen werden in Abhängigkeit des jeweiligen Standortes ausgewählt. Dabei sollten die infrage kommenden Pflanzen trockenheitsresistent, winterhart, mehrjährig und heimisch sein.

Zweckmäßigerweise sind zumindest einzelne Schichten der Textilstruktur und/oder der Pflanzenträgermatte miteinander vernäht, vernadelt oder anderweitig kraftschlüssig miteinander verbunden. Bevorzugt können sämtliche Schichten der Textilstruktur und/oder der Pflanzenträgermatte miteinander vernäht, vernadelt oder anderweitig kraftschlüssig miteinander verbunden sein.

Zur Versorgung der Pflanzen mit Wasser umfasst die Trägervorrichtung eine gelochte Wasserrinne, durch die Wasser in die Abstandsschicht leitbar ist. Beispielsweise wird Regenwasser über Dachflächen, Tanks, Zisternen und ähnliches gesammelt und direkt in die Rahmenkonstruktion der Trägervorrichtung den Modulen mit der Pflanzenträgermatte zugeführt. An der Oberseite wird das gesammelte Wasser über Lochungen direkt und gezielt in die Abstandsschicht eingeleitet. Von dort aus wird das Wasser flächig verteilt, gespeichert und über die Kapillarwirkungen der textilen Schichten in Richtung der Pflanzen gelenkt.

Die Vorrichtung bildet auch aufgrund ihrer wasserlenkenden und wasserspeichernden Eigenschaften, eine autarke, sich selbst bewässernde wandgebundene Fassadenbegrünung, die in der Regel ohne eine separate Haustechnik wie Pumpen oder dergleichen auskommt. Insbesondere wird ein in sich geschlossenes System gebildet.

Die Trägervorrichtung umfasst neben einer wand- bzw. fassadenseitigen Unterkonstruktion eine Rahmenkonstruktion, in der modular Pflanzenträgermatten umfassende Textilstrukturen angeordnet sind. Die Rahmenkonstruktion bzw. ein Rahmen der Rahmenkonstruktion bildet die Einfassung und die Befestigung für den textilen Vegetationsträger nämlich die Textilstruktur und die Pflanzenträgermatte. Die Rahmenkonstruktion kann eine Rückwand umfassen und ist demnach kassettenartig aufgebaut. Die Rahmenkonstruktion kann hinterlüftet an der Unterkonstruktion montiert werden. Auf der Rückwand sind Bolzen mit Gewinde zur Befestigung der Textilstruktur mit der textilen Pflanzenträgermatte angebracht, geschweißt oder genietet.

Oberseitig wird mittels der geneigten Wasserrinne Wasser gesammelt und von dort über Langlöcher / Lochungen direkt und gezielt in die Abstandsschicht, die als Wasserlenkungs- und Wasserrückhaltungsschicht fungiert, eingeleitet. Um Staunässe an der Unterseite des Rahmens zu vermeiden sowie die kaskadenartige Wasserversorgung bei modular übereinander angeordneten Textilstrukturen, die Pflanzenträgermatten umfassen, zu gewährleisten, sind auch an der Unterseite des ebenfalls geneigten Rahmens Langlöcher / Lochungen vorgesehen, durch die überschüssiges Wasser abfließen kann.

Der Rahmen der Trägervorrichtung, die eine Vielzahl neben- und/oder übereinander angeordneter Rahmen umfassen kann, fasst den textilen Vegetationsträger also die Textilstruktur mit der Pflanzenträgermatte ein und schützt diesen vor Wind-, Sog- und Zugkräften. Der Rahmen ist statisch erforderlich, um die Traglast und das Gewicht am Objekt abzuleiten.

An der Oberseite des Rahmens wird (Regen-)Wasser gesammelt und durch Lochungen in die "Wasserlenkungs- und Wasserrückhaltungsschicht" geführt. An der Unterseite des Rahmens wird überschüssiges (Regen-)Wasser zielgerichtet abgeleitet Die Montage des Rahmens mit Abstand zur Objektfassade schützt das Objekt vor Feuchtigkeit und Nässe.

Eine Textilstruktur kann beispielsweise folgenden Aufbau aufweisen:
Modulares Textil-Substrat-System zur wandgebundenen Begrünung von Außenfassaden zum Beispiel von Gebäuden Detaillierter Aufbau der Textilkonstruktion beziehungsweise des textilen Vegetationsträgers von der Fassade zur Pflanze:
Textile Schicht I:
   Funktionen: Wasserlenkungs- und Wasserrückhaltungsschicht
   Textiles Flächengebilde: Dreidimensionales Flächengebilde, insbesondere ein Abstandsgewirk
   Material: Naturfasern oder Chemiefasern, im Speziellen: 100 % Polyester, insbesondere recyclebar
   Dicke: ca. 10 - 25 mm
   Flächengewicht (trocken): ca. 1.000 - 2.000 g/m²
Textile Schicht II:
   Funktionen: Wasserverteilungsschicht + Wasserspeicher-, Nährstoff- und Dämmschicht
   Das aus der Textilen Schicht I sequenziell austretende Wasser wird in diesem hydrophilen Vlies flächig verteilt. Das Vlies stellt keinen strengen Durchwurzelungsschutz dar, soll aber die Wurzeln der Flachballenpflanzen zumindest temporär aufhalten beziehungsweise lenken.
   Textiles Flächengebilde: insbesondere ein Vlies / Steinwolle / Steinwollmatte
   Material: Naturfasern oder Chemiefasern, insbesondere 100 % Steinwolle, insbesondere recyclebar
   Dicke: ca. 10 - 40 mm
   Flächengewicht (trocken): ca. 1.000 - 4.000 g/m²
Textile Schicht III:
   Funktionen: Windschutz, zusätzlicher Infrarotabsorber
   Dieses Gewebe übernimmt die Funktionen als Windschutz und zusätzlich zur textilen Schicht IV als Infrarotabsorber. Darüber hinaus kann das Vlies als eine Art Schutzschicht in der Verarbeitung von Textiler Schicht III eingesetzt werden. Das Gewebe ist in seiner Gesamtheit sortenrein, recyclebar und kompostierbar.
   Textiles Flächengebilde: insbesondere ein Gewebe mit Satin-Bindung
   Material: Naturfasern oder Chemiefasern insbesondere 100 % Basaltfasern, insbesondere recyclebar
   Dicke: ca. 0,1 - 1 mm
   Flächengewicht: ca. 100 - 600 g/m²
Textile Schicht IV:
   Funktionen: Befestigungs- beziehungsweise Deck- und Drainageschicht
   Textiles Flächengebilde: insbesondere ein Vlies mit integriertem Geogitter
   Material: Naturfasern oder Chemiefasern, insbesondere ein Vlies aus 100 % Basaltfasern, insbesondere recyclebar, Geogitter: Basaltfasern, Polyester
   Dicke: ca. 3 - 9 mm
   Flächengewicht (trocken): ca. 300 - 900 g/m²

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

### Es zeigt:

- Fig. 1: eine Vorderansicht der Vorrichtung nach der Erfindung,
- Fig. 2: eine Seitenansicht der Vorrichtung nach Fig. 1,
- Fig. 3: eine Seitenansicht der Vorrichtung nach Fig. 1 im Schnitt mit eingesetzten Pflanzen,
- Fig. 4: eine Draufsicht auf die Vorrichtung nach Fig. 3,
- Fig. 5: eine Explosionsdarstellung der Vorrichtung und
- Fig. 6: eine teilweise Schnittdarstellung der Erfindung.

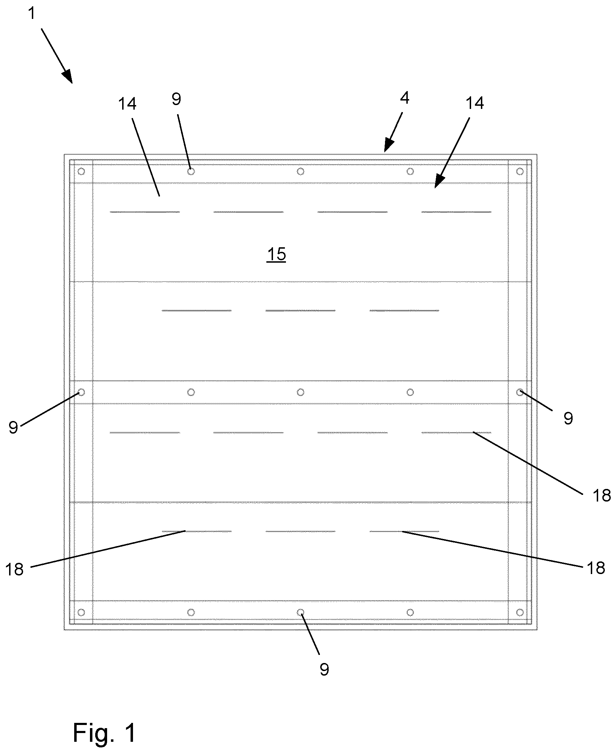

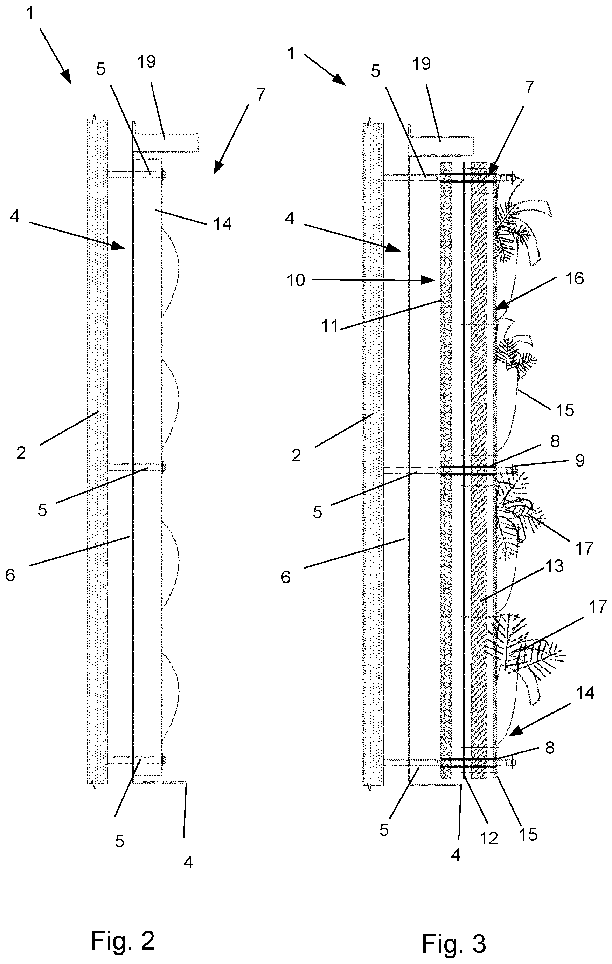

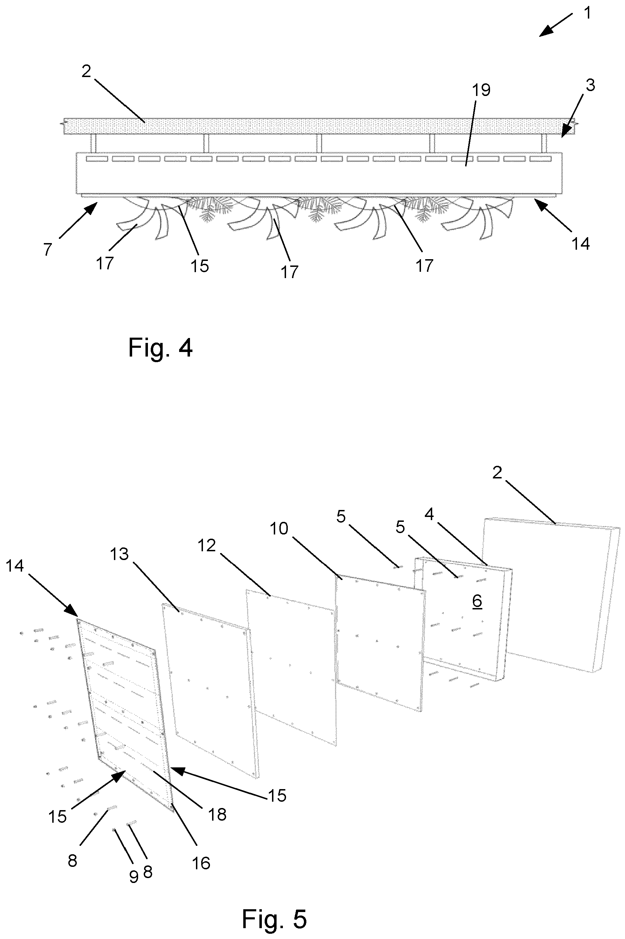

In den Figuren 1 bis 6 bezeichnen die gleichen Bezugszeichen jeweils die gleichen Komponenten der Vorrichtung 1.

Die Vorrichtung 1 zur Begrünung einer Wand 2 umfasst eine Trägervorrichtung 3 mit einem umlaufenden Rahmen 4 sowie einer mit Haltebolzen 5 bestückten Rückwand 6 zur Befestigung an der Wand 2 und zur Halterung einer mehrschichtigen oder mehrlagigen Textilstruktur 7 mit einer Pflanzenträgermatte 14. Die Textilstruktur 7 ist beispielsweise zum Einsetzen von Haltehülsen 8, in die die Haltebolzen 5 eingesetzt sind, gelocht. Auf der freien Seite der Textilstruktur 7 kann diese beispielsweise mittels einer zwischen einer Windschutzschicht und der Pflanzenträgermatte eingearbeiteten Aluminiumschiene oder auf die Haltebolzen 5 aufgesetzten Halteblechen 9, Unterlegscheiben oder dergleichen und Muttern fixiert werden.

Die Textilstruktur 7 umfasst auf der der Rückwand 6 zugewandten Seite ein Abstandsgewirk 10 mit einer Distanzlage 11, die Abstandsfäden aus Monofiliament-Garn sowie Multifilament-Garn umfasst, die der Wasserrückhaltung dienen. Die Distanzlage 11 ist auf der der Rückwand 6 zugewandten Unterseite überwiegend aus einem hydrophoben Monofilament-Garn gefertigt und auf der offenporigen Oberseite überwiegend aus einem hydrophilen Multifilament-Garn, was dafür sorgt, dass in das Abstandsgewirk 10 eingeleitetes Regenwasser mittels Kapillarkräften an der Oberseite gehalten wird. Sonach kann das Abstandsgewirk 10 auch als Wasserlenkungs- und Wasserrückhaltungsschicht der Textilstruktur 7 bezeichnet werden.

An das Abstandsgewirk 10 schließt sich eine aus einem hydrophilen Vlies bestehende Schutzschicht 12 an, die im Wesentlichen aus einem Polylactid und/oder einer Naturfaser gefertigt ist und als Wasserverteilungs- und Durchwurzelungsschutzschicht dient, da sie das aus dem Abstandsgewirk 10 austretende Wasser flächig verteilt und bis zur Zersetzung die Wurzeln der Flachballenpflanzen aufhält bzw. lenkt. Alternativ oder zusätzlich kann eine Speicherschicht für Wasser vorgesehen sein. Eine Windschutzschicht kann zwischen einer Speicherschicht und einer außenseitig angeordneten Pflanzenträgermatte angeordnet sein.

Auf der Schutzschicht 12 ist eine Speicherschicht 13 der Textilstruktur 7 angeordnet, die aus einem Steinwollvlies gefertigt ist. Diese Speicherschicht 13 übernimmt die Funktion der Wasser- und Nährstoffspeicherung und dient darüber hinaus einer Wärmedämmung der Wand 2.

Alternativ oder zusätzlich kann eine Windschutzschicht vorgesehen sein.

Die außenseitige Pflanzenträgermatte 14 umfasst ein beidseitig mit Vliesen 15 abgedecktes Geogitter 16, wobei das Vlies 15 eine Basaltfaser und die Pflanzenträgermatte 14 insgesamt ein erdenloses Substrat umfasst. Zum Einsetzen von Pflanzen 17 ist die außenseitige Pflanzenträgermatte 14, die als Befestigungsschicht bezeichnet werden kann, mit Schnitten 18 versehen.

Die einzelnen Schichten bzw. Lagen der Textilstruktur 7 und/oder der Pflanzenträgermatte 14 sind kraftschlüssig miteinander verbunden insbesondere vernäht.

An der Wand 2 bzw. einer Fassade eines Gebäudes lassen sich vorzugsweise mehrere Vorrichtungen 1 zueinander beabstandet oder unmittelbar aneinandergrenzend anbringen, wobei dachseitige bzw. oberseitige Trägervorrichtungen 3 eine gelochte Wasserrinne 19 umfassen. Über die Wasser respektive Regenwasser in das Abstandsgewirk 10 geleitet wird, das unterseitig über ein ebenfalls gelochtes Bauteil des Rahmens 4 zu der benachbarten Vorrichtung 1 fließt.

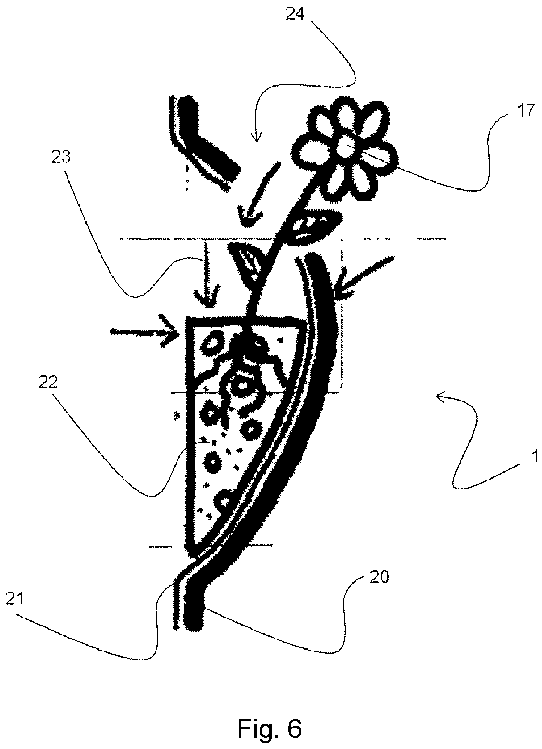

Schließlich ist in Figur 6 ein Teil der Vorrichtung 1 geschnitten dargestellt. Mit der Vorrichtung 1 werden Pflanzen 17, die in einem Substrat 22 wachsen, beispielsweise an einer Wand 2 eines Gebäudes angeordnet, um diese zu begrünen. Das Substrat 22 kann wie vorstehend beschrieben ausgewählt werden, insbesondere dient es der Wasserspeicherung sowie der Versorgung der Pflanze 17 mit Nährstoffen. Dabei ist beispielsweise ein außenseitiges Basaltvlies 20 vorgesehen, das im Wesentlichen kein Wasser durchlässt, so dass bei Niederschlag das Substrat 22 nicht zu feucht wird. Lediglich durch eine Öffnung 24 kann Wasser eintreten beziehungsweise die Pflanze 17 herauswachsen. Das Wasser zur Versorgung der Pflanze 17, dessen Fließrichtung durch den Pfeil 23 angedeutet ist, wird wie vorstehend beschrieben im Wesentlichen von der Vorrichtung 1 kontrolliert zugeführt. Zusätzlich ist hier ein Basaltgewebe 21 vorgesehen, dass innenseitig am Basaltvlies 20 anliegt. Das Basaltvlies 20 dient auch als Witterungsschutz. Basaltgewebe 21 und Basaltvlies 20 bilden eine Tasche, in der das Substrat 22 und die Pflanze 17 aufgenommen sind. Außenseitig zirkuliert Luft zur Versorgung der Pflanze und zur Temperaturregulierung.

### Bezugszeichen

- 1.: Vorrichtung
- 2.: Wand
- 3.: Trägervorrichtung
- 4.: Rahmen
- 5.: Haltebolzen
- 6.: Rückwand
- 7.: Textilstruktur
- 8.: Haltehülse
- 9.: Halteblech
- 10.: Abstandsgewirk
- 11.: Distanzlage
- 12.: Schutzschicht
- 13.: Speicherschicht
- 14.: Pflanzenträgermatte
- 15.: Vlies
- 16.: Geogitter
- 17.: Pflanze
- 18.: Schnitt
- 19.: Wasserrinne
- 20.: Basaltvlies
- 21.: Basaltgewebe
- 22.: Substrat
- 23.: Pfeil (Fließrichtung von Wasser)
- 24.: Öffnung

## Patentansprüche

1. Vorrichtung (1) zur Begrünung einer Wand (2) mit einer wandgebundenen Trägervorrichtung (3) und einer daran befestigten Textilstruktur (7), die eine Pflanzenträgermatte (14) umfasst, **dadurch gekennzeichnet, dass** die Textilstruktur (7) mehrere Schichten umfasst, wobei auf der der Trägervorrichtung (3) zugewandten Seite ein Abstandsgewirk (10) angeordnet ist und die Pflanzenträgermatte (14) eine außenseitige Befestigungsschicht für die Pflanzen (17) umfasst.

2. Vorrichtung (1) nach Anspruch 1, **dadurch gekennzeichnet, dass** die der Trägervorrichtung (3) zugewandte Seite des Abstandsgewirks (10) überwiegend aus einem hydrophoben Monofilament-Garn gefertigt ist, eine Distanzlage (11) sowohl Monofiliament-Garn als auch Multifilament-Garn umfasst und eine in Richtung der Pflanzenträgermatte (14) weisende Seite des Abstandsgewirks (10) überwiegend aus einem hydrophilen Multifilament-Garn gefertigt ist.

3. Vorrichtung (1) nach Anspruch 1, **dadurch gekennzeichnet, dass** die Textilstruktur (7) auf der dem Abstandsgewirk (10) zugewandten Seite eine Schutzschicht (12) umfasst.

4. Vorrichtung (1) nach Anspruch 3, **dadurch gekennzeichnet, dass** die Schutzschicht (12) überwiegend aus einem Polylactid und einer Naturfaser gefertigt ist.

5. Vorrichtung (1) nach Anspruch 1, **dadurch gekennzeichnet, dass** die Textilstruktur (7) eine auf der Schutzschicht (12) angeordnete Speicherschicht (13) umfasst.

6. Vorrichtung (1) nach Anspruch 5, **dadurch gekennzeichnet, dass** die Speicherschicht (13) aus einem Vlies gefertigt ist.

7. Vorrichtung (1) nach Anspruch 6, **dadurch gekennzeichnet, dass** das Vlies aus Steinwolle besteht.

8. Vorrichtung (1) nach Anspruch 1, **dadurch gekennzeichnet, dass** die außenseitige Befestigungsschicht zum Befestigen von Pflanzen (17) Öffnungen aufweist.

9. Vorrichtung (1) nach Anspruch 8, **dadurch gekennzeichnet, dass** die Pflanzenträgermatte (14) ein beidseitig mit Vliesen (15) abgedecktes Geogitter (16) umfasst.

10. Vorrichtung (1) nach Anspruch 9, **dadurch gekennzeichnet, dass** das Vlies (15) eine Basaltfaser umfasst.

11. Vorrichtung (1) nach 8 oder 9, **dadurch gekennzeichnet, dass** die Pflanzenträgermatte (14) ein erdenloses Substrat umfasst.

12. Vorrichtung (1) nach einem der vorhergehenden Ansprüche, **dadurch gekennzeichnet, dass** die Textilstruktur (7) eine Speicherschicht (12) umfasst.

13. Vorrichtung (1) nach einem der vorhergehenden Ansprüche, **dadurch gekennzeichnet, dass** die Textilstruktur (7) eine Windschutzschicht (12) umfasst.

14. Vorrichtung (1) nach einem der Ansprüche 1 bis 11, **dadurch gekennzeichnet, dass** zumindest einzelne Schichten der Textilstruktur (7) und/oder der Pflanzenträgermatte (14) kraftschlüssig miteinander verbunden sind.

15. Vorrichtung (1) nach Anspruch 12, **dadurch gekennzeichnet, dass** zumindest einzelne Schichten der Textilstruktur (7) und/oder der Pflanzenträgermatte (14) miteinander vernäht sind.

16. Vorrichtung (1) nach Anspruch 1, **dadurch gekennzeichnet, dass** die Trägervorrichtung (3) eine gelochte Wasserrinne (19) umfasst, durch die Wasser in das Abstandsgewirk (10) leitbar ist.

17. Vorrichtung (1) nach Anspruch 1, **dadurch gekennzeichnet, dass** die Trägervorrichtung (3) Haltebolzen (1) umfasst, die sich durch die Textilstruktur (7) erstrecken.
